# DEMANDE DE BREVET EUROPEEN

(11) **EP 3 599 322 A1**
(43) Date de publication de la demande: **29.01.2020**
(21) Numéro de dépôt: 19187790.1
(22) Date de dépôt: 23.07.2019
(51) Int. Cl.: E04G 23/00, A47L 1/02, B08B 3/02

(54) **ROBOT DE MAINTENANCE D'UNE SURFACE ET PROCEDE DE MAINTENANCE**

(30) Priorité: 26.07.2018 FR 1856954
(71) Demandeur: Clean Drone, 13390 Auriol (FR)
(72) Inventeur: TOILIER, Lionel, 13390 AURIOL (FR)
(74) Mandataire: Santarelli

(57) **Abrégé**

L'invention concerne un robot (100) de maintenance d'une surface caractérisé en ce qu'il comprend :
- un aéronef (110) conçu pour se déplacer à proximité de la surface ;
- une station de base (120) conçue pour rester au sol ;
- une gaine étanche (140) reliant l'aéronef à la station de base, la gaine étanche comprenant :
- un tuyau pour alimenter l'aéronef en fluide à partir de la station de base pendant une opération de maintenance de la surface, et
- un câble pour alimenter l'aéronef en énergie.

## Description

### DOMAINE DE L'INVENTION

L'invention est dans le domaine des robots. Elle concerne en particulier un robot de maintenance, ainsi qu'un procédé mis en oeuvre par un tel robot.

### CONTEXTE DE L'INVENTION

Aujourd'hui, les surfaces extérieures des bâtiments sont de plus en plus exploitées dans les villes, par exemple dans un but publicitaire. Il est donc important d'assurer régulièrement leur maintenance.

Généralement, le nettoyage et l'habillage de telles surfaces sont mis en oeuvre par des opérateurs humains transportés par une nacelle ou suspendus dans le vide avec des moyens permettant de maintenir à hauteur les outils nécessaires à la maintenance de la surface.

Ceci présente divers inconvénients, notamment concernant la sécurité des personnes, les moyens matériels à mettre en oeuvre et le temps de traitement. De plus, les reliefs du bâtiment, comme par exemple un boitier de climatisation ou des fenêtres, peuvent compliquer le travail des opérateurs et altérer le rendu visuel de l'habillage.

Il existe donc un besoin d'améliorer les dispositifs de maintenance de surface existants.

### RESUME DE L'INVENTION

La présente invention a ainsi pour objet de pallier au moins un des inconvénients précités.

Dans ce contexte, un premier aspect de l'invention concerne un robot de maintenance d'une surface caractérisé en ce qu'il comprend :
- un aéronef conçu pour se déplacer à proximité de la surface ;
- une station de base conçue pour rester au sol ;
- une gaine étanche reliant l'aéronef à la station de base, la gaine étanche comprenant :
   - un tuyau pour alimenter l'aéronef en fluide à partir de la station de base pendant une opération de maintenance de la surface, et
   - un câble pour alimenter l'aéronef en énergie.

Avantageusement, ce robot permet le bon déroulement d'opérations de maintenance tout en améliorant la sécurité des personnes. Il nécessite moins de moyens matériels tels que des échafaudages et moins de moyens humains puisque le robot réalise la plupart des opérations de maintenance de manière autonome. Un unique opérateur au sol peut contrôler le bon déroulement des opérations. En outre, le temps de traitement est réduit.

Par ailleurs, les reliefs du bâtiment, comme par exemple un boitier de climatisation ou des fenêtres, peuvent être facilement pris en compte par l'algorithme mis en oeuvre par le robot, de sorte que l'opération de maintenance est réalisée de manière complète et efficace et le rendu visuel est meilleur.

De plus, le fait que l'aéronef soit alimenté par la station de base au sol permet d'améliorer sa stabilité. Son poids étant de ce fait moindre, il consomme moins d'énergie que s'il embarquait un réservoir *ad hoc.* Puisque le fluide lui est fourni en continu par la station de base, le l'aéronef n'est pas limité par la quantité de fluide nécessaire pour effectuer l'opération de maintenance.

Avantageusement, l'alimentation continue de l'aéronef par la station de base lui permet de voler sans interruption durant toute l'opération de maintenance, indépendamment de la taille de la surface à traiter et de la durée de l'opération.

D'autres caractéristiques du robot selon des modes de réalisation de l'invention sont décrites dans les revendications dépendantes.

Dans des modes particuliers de réalisation, l'aéronef est un drone autoporté.

Dans des modes particuliers de réalisation, la gaine étanche comprend en outre un câble permettant l'échange de données entre l'aéronef et la station au sol.

Ce câble est par exemple de type RJ45.

Dans des modes particuliers de réalisation, la station de base comprend des moyens de communication de préférence sans contact avec un dispositif électronique contrôlé par un opérateur.

Les moyens de communication sont par exemple de type Wi-Fi ou Bluetooth (Wi-Fi et Bluetooth sont des marques). En variante, les moyens de communication pourraient être à contact, c'est-à-dire filaire.

Le dispositif électronique peut être indépendant de la station. Par exemple, il peut s'agir d'une tablette, d'un smartphone, d'un PC, d'une manette de pilotage. En variante, le dispositif électronique pourrait être une interface de la station ou fixée sur celle-ci par exemple un écran tactile.

Dans des modes particuliers de réalisation, l'aéronef embarque au moins un capteur permettant de repérer une surface à proximité.

Ce capteur est par exemple une caméra, un télémètre, un altimètre, un GPS, un laser, un gyroscope.

Les informations obtenues par les capteurs et caméras au niveau de l'aéronef sont avantageusement analysées et mémorisées afin de définir un programme de maintenance de la surface.

Dans des modes de réalisation, ce programme de maintenance peut être mémorisé pour une éventuelle réutilisation ultérieure par exemple lorsque la même surface devrait à nouveau être traitée par le robot.

Dans des modes de réalisation, il est prévu que l'aéronef accueille une carte mère capable d'exécuter des instructions pour la mise en oeuvre d'étapes d'un procédé pour créer, mémoriser et rejouer des programmes de maintenance prédéfinis.

Dans des modes particuliers de réalisation, la gaine étanche est fixée à un roulement à bille au niveau de la station de base.

Dans des modes particuliers de réalisation, l'opération de maintenance de la surface est une opération de nettoyage ou d'habillage.

Un deuxième aspect de l'invention concerne un procédé de maintenance d'une surface mis en oeuvre par un robot de maintenance, le procédé étant caractérisé en ce qu'il comprend les étapes suivantes :
- cartographie de la surface ;
- test pour déterminer si la surface cartographiée est déjà connue du robot ;
- si la surface est inconnue du robot :
   - réalisation d'une carte fine des reliefs de la surface, puis
   - lancement d'une opération de maintenance à partir de la carte réalisée, et
   - enregistrement de l'opération de maintenance comme programme associé à la surface ;
- si la surface est déjà connue, lancement d'une opération de maintenance selon un programme précédemment enregistré pour cette surface.

Les avantages, buts et caractéristiques particulières de ce procédé sont similaires à ceux du robot précité.

En outre, ce procédé permet une économie de temps puisque des programmes peuvent être rejoués à détection d'une surface connue.

Dans des modes particuliers de réalisation, l'opération de maintenance de la surface est une opération de nettoyage ou d'habillage de la surface.

Dans des modes particuliers de réalisation, le procédé comprend en outre une étape de contrôle durant laquelle au moins une zone de la surface à traiter de nouveau est identifiée.

Dans des modes particuliers de réalisation, les différentes étapes des procédés précités sont déterminées par des instructions de programmes d'ordinateurs.

En conséquence, l'invention vise aussi un programme d'ordinateur sur un support d'informations, ce programme étant susceptible d'être mis en oeuvre par un microprocesseur, ce programme comprenant des instructions adaptées à la mise en oeuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un microprocesseur, et comprenant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM (pour *Read Only Memory*), par exemple une ROM de microcircuit, ou encore un moyen d'enregistrement magnétique, par exemple un disque dur, ou encore une mémoire flash.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'informations peut être un circuit intégré dans lequel le programme est incorporé, le circuit étant adapté pour exécuter ou pour être utilisé dans l'exécution du procédé en question.

Le support d'informations et le programme d'ordinateur précités présentent des caractéristiques et avantages analogues au procédé qu'ils mettent en oeuvre.

### BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :
- La **figure 1** représente un exemple de contexte dans lequel un robot conforme à des modes de réalisation de l'invention peut être utilisé ;
- La **figure 2** représente, sous forme d'organigramme, des étapes générales d'un procédé conforme à un mode de réalisation de l'invention.

### DESCRIPTION DETAILLEE DE L'INVENTION

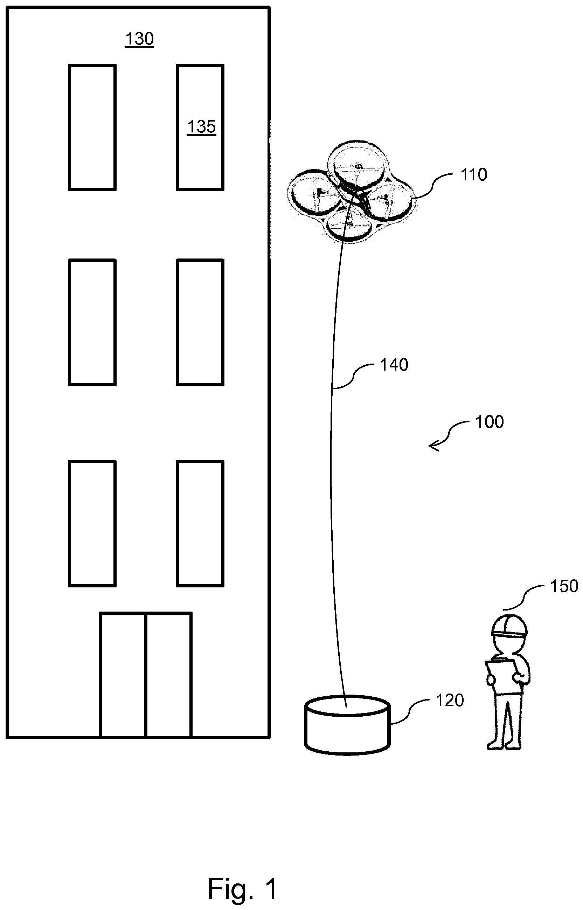

La **figure 1** représente un exemple de contexte dans lequel un robot 100 conforme à des modes de réalisation de l'invention peut être utilisé.

De manière générale, un robot 100 selon l'invention comprend un aéronef 110, par exemple un drone télépiloté, relié à une base au sol, appelée station de base 120. Cette base peut être fixe ou mobile, par exemple sur roulettes.

Dans le contexte illustré, le drone 110 gravite à proximité d'une surface 130 telle qu'une parois ou façade d'un bâtiment (ex. monument, immeuble) afin d'effectuer une opération de maintenance. L'invention peut aussi être utilisée pour effectuer la maintenance d'autres types de surfaces, comme par exemple les parois d'un bateau.

Afin de repérer la surface à traiter, le drone 110 dispose d'une nacelle prévue pour accueillir au moins une caméra, par exemple analogique ou thermique. Le drone embarque également au moins un capteur tel qu'un télémètre ou un altimètre, lui permettant par exemple de se maintenir à une certaine distance (par exemple constante) de la surface à traiter. La distance peut être choisie en fonction de l'opération de maintenance à effectuer. On peut également prévoir un capteur configuré pour détecter un obstacle sur la surface tel qu'une fenêtre 135, éventuellement en mouvement (par exemple l'ouverture d'une fenêtre). Le drone peut avantageusement embarquer un GPS.

Comme il sera expliqué par la suite, les informations obtenues par les capteurs et caméras au niveau du drone sont avantageusement analysées et mémorisées afin de définir un programme de maintenance de la surface. Dans des modes de réalisation, ce programme de maintenance peut être mémorisé pour une éventuelle réutilisation ultérieure par exemple lorsque la même surface devrait à nouveau être traitée par le drone. A cet effet, il est prévu que le drone accueille une carte mère capable d'exécuter des instructions pour la mise en oeuvre d'étapes d'un procédé pour créer, mémoriser et rejouer des programmes de maintenance prédéfinis.

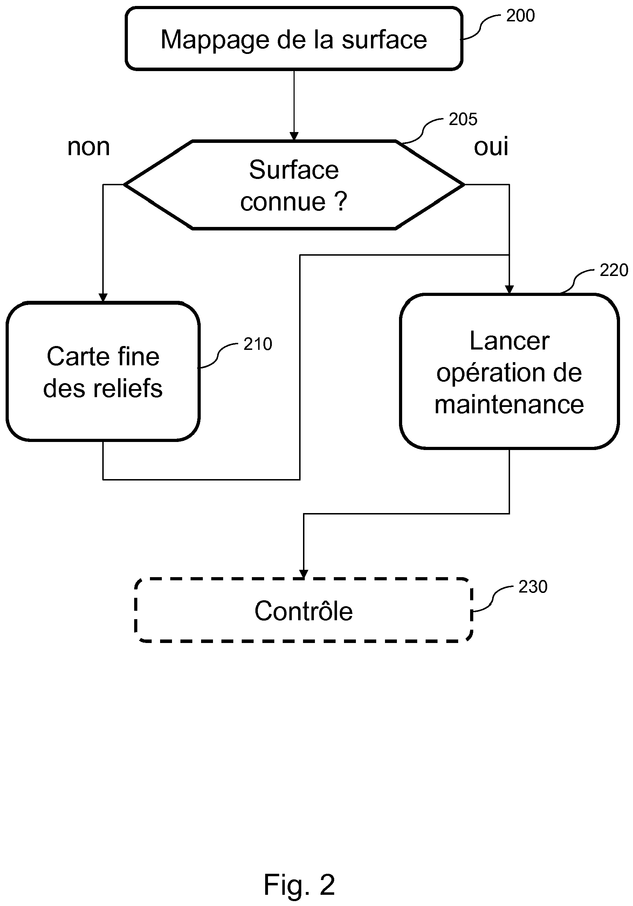

Les étapes générales d'un tel procédé sont décrites en référence à la figure 2. Des connexions entre la carte mère et les différents capteurs et éléments décrits par la suite (buse, RJ45, caméra, onduleur, batteries de secours, etc.) sont également prévues.

Selon un mode de réalisation, l'opération de maintenance consiste à nettoyer, par exemple à haute pression, toutes ou partie des vitres et façades du bâtiment.

Selon un autre mode de réalisation, l'opération de maintenance consiste à réaliser un habillage, par exemple des graffitis, dessins ou écritures publicitaires, sur toutes ou partie des façades du bâtiment.

Le drone 110 est relié à la station de base 120 par au moins un tuyau et au moins un câble (référencés 140) entouré par une gaine étanche appelée gaine sol-air. De préférence, la connexion du câble et du tuyau sur le drone est étanche. Cette étanchéité est par exemple obtenue par l'utilisation d'un verni, de matériaux IP 45 protégés par une couche d'étanchéité en silicone ou matériau équivalent.

La connexion se fait par exemple à l'aide d'un système d'écrou sur un roulement à bille permettant à la gaine sol-air de tourner sur elle-même, par exemple à 360°. Selon des modes de réalisation, la gaine sol-air est enroulée et déroulée de façon motorisée et asservie par la station de base. Un signal d'impulsion (par exemple d'au moins 360 impulsions par tour) permet de suivre le bon avancement du mouvement demandé. En fonction de mesures fournies par les capteurs, par exemple un altimètre, l'algorithme commande l'enrouleur automatisé pour permettre au tuyau de se dérouler sans exercer une retenue sur le drone lors de ses déplacements horizontaux.

La station de base 120 comprend deux unités opérationnelles appelées respectivement section alimentation et section pilotage.

La section alimentation alimente le drone en fluide liquide (gras et non gras) ainsi qu'en fluide d'air sur commande de la partie pilotage.

En pratique, la section alimentation comprend un compresseur qui permet d'alimenter le drone en fluide via le ou les tuyaux. Le fluide est par exemple du liquide de lavage, de rinçage, ou encore de la peinture en fonction de l'opération de maintenance à réaliser.

Avantageusement, l'absence de réservoir de fluide et de compresseur au niveau du drone permet d'améliorer la stabilité du drone. Son poids étant de ce fait moindre, il consomme moins d'énergie que s'il embarquait un réservoir *ad hoc.* Puisque le fluide lui est fourni en continu par la station de base, le drone n'est pas limité par la quantité de fluide nécessaire pour effectuer l'opération de maintenance.

La section pilotage centralise les données de vol et les informations nécessaires au bon positionnement du drone. Elle contrôle le positionnement du drone via des ordres de déplacement ainsi que la section alimentation. La section pilotage orchestre l'exécution de la séquence de nettoyage.

Pour ce faire, la station au sol 120 comprend un emplacement pour carte mère. Cette carte mère permet de mettre en oeuvre des étapes d'un algorithme commandant notamment le compresseur et les valves à l'entrée du ou des tuyaux pour le passage et la projection de différents fluides. Si besoin, l'opérateur peut intervenir sur le compresseur et les valves via la section pilotage .

Le drone quant à lui est équipé d'au moins une buse de projection de fluide dont l'angle de projection est réglable, par exemple de 30 à 45° par rapport à la verticale. Elle comprend par exemple un tube en inox avec au moins un embout réglable associé à un capteur connecté à la carte mère du drone permettant de commander l'angle de sortie du fluide par chaque embout.

Afin de le protéger des projections de retour de fluide, le drone comprend avantageusement un carénage. Celui-ci protège au moins la partie avant du drone, c'est-à-dire celle qui se trouve face à la surface à traiter, ainsi que les hélices.

Le câble permet d'alimenter le drone en énergie, par exemple via un moteur thermique ou électrique situé au niveau de la station de base.

Grâce à cette alimentation continue, le drone peut voler sans interruption durant toute l'opération de maintenance, indépendamment de la taille de la surface à traiter et de la durée de l'opération.

Le drone peut comprendre un transformateur qui transforme le courant alternatif reçu de la station de base en courant continu. Ce courant continu a par exemple les caractéristiques suivantes : 3000W, 40A, 22V ou 56V. Alternativement, c'est la station de base qui embarque ce transformateur.

Le câble d'alimentation est de préférence optimisé en poids pour une capacité électrique de 3kva. Il permet de préférence l'utilisation d'un courant porteur afin de faire transiter les informations numériques de façon bidirectionnelle.

De préférence, les câbles et tuyaux (la gaine sol-air) sont fixés sur des roulements à bille afin de pouvoir suivre les mouvements du drone pendant l'opération de maintenance. Le déroulement des câbles et tuyaux se fait de préférence à l'aide d'un enrouleur-dérouleur automatique. La longueur doit être suffisante pour permettre au drone de balayer l'intégralité de la surface à traiter. Par exemple, on peut prévoir une longueur de 120m.

Un câble RJ45 ou équivalent est également prévu dans la gaine étanche du câble d'alimentation ou dans une autre gaine étanche, pour l'échange de données entre la carte mère du drone et la station de base.

Le drone comprend en outre des moyens de communication sans contact (ex. Wi-Fi, Bluetooth) ayant une portée suffisante pour communiquer avec un dispositif électronique tiers, par exemple une tablette ou un smartphone, permettant à un opérateur 150 de contrôler le drone. Selon une variante, la station de base intègre des moyens de communication de préférence sans contact (ex. Wi-Fi, Bluetooth) avec le dispositif électronique tiers à partir duquel l'opérateur contrôle le drone, servant ainsi de relai avec le drone qui reçoit les commandes de l'opérateur via le câble RJ45.

Avantageusement, un seul opérateur peut contrôler l'opération de maintenance d'une surface étendue. De plus, la maintenance peut se faire sans risque pour sa sécurité puisque l'opérateur agit depuis le sol et ne nécessite pas d'équipement couteux tel qu'une grue ou une nacelle.

La station de base est elle-même alimentée en énergie, par exemple par branchement direct sur le réseau d'électricité ou sur un groupe électrogène. Elle peut également être reliée à un réseau de fluide ou à un réservoir externe (cuve).

Les commandes logiques mises en oeuvre par la section pilotage de la station de base doivent de préférence obéir aux prérogatives suivantes :
- niveau Logique BAS en entrée : VIL = 0.3 x Vcc = 0.3 x 5V = 1,5 Volts. Une tension inférieure à 1.5V est considérée comme un niveau BAS ;
- niveau Logique HAUT en entrée : VIH = 0.6 x Vcc = 0.6 x 5V = 3.0 Volts. Une tension supérieure à 3V est considérée comme un niveau HAUT ;
- la zone intermédiaire 1,5V - 3V est indéterminée et doit être évitée ;
- niveau de tension minimum VIL = 0 volts, tension maximum VIH = 5 Volts, 48 niveaux de tension étagés entre les valeurs VIL et VIH, filtre RC permettant un changement de tension stabilisée en dessous de 200ms.

Afin de prévenir tout problème de sécurité, le drone comprend :
- un programme de sécurité capable de commander un atterrissage d'urgence du drone en cas de besoin, par exemple en cas de problème d'alimentation ou de coupure de communication avec l'opérateur ;
- des batteries de secours lui permettant de se poser en urgence si une défaillance du robot est détectée. Un telle défaillance peut provenir par exemple du tuyau, du câble ou de la source d'énergie ;
- un onduleur capable de basculer l'alimentation sur les batteries de secours lorsqu'un problème d'alimentation ou une dégradation du câble est détecté(e). Selon des modes de réalisation, lorsque l'onduleur prend le relai de la source d'énergie, le drone est invité à effectuer un atterrissage dans les plus brefs délais. L'opérateur peut également être alerté d'une telle situation sur le dispositif électronique tiers, par exemple par un signal sonore ou lumineux relayé par la station de base. De préférence, une carte de commande SNMP (pour *Simple Network Management Protocol*) est présente sur l'onduleur et une prise électrique standard est prévue sur la sortie de l'onduleur afin de connecter le matériel CPL (pour Courant Porteur en Ligne) au câble d'alimentation. Il est également prévu une commande logique capable de couper l'alimentation électrique en sortie de l'onduleur ;
- un parachute pyrotechnique et coupe moteur.

De manière générale, le drone est conçu pour répondre aux règles et exigences gouvernementales régissant l'utilisation de tels aéronefs télépilotés. Par exemple, pour la France, le drone est conforme au cadre réglementaire mis en place par la DGAC. L'homme du métier saura adapter le drone en fonction des contraintes législatives locales.

Selon un premier mode de réalisation, le robot est un robot de nettoyage. La station de base est alors conçue pour projeter différents types de fluides :
- du produit de lavage ;
- du fluide liquide en haute pression ;
- de l'eau purifiée (déminéralisée ou osmosée) ;
- de l'air comprimé.

Pour ce faire, la station de base comprend :
- un nettoyeur haute pression ;
- un osmoseur ;
- un compresseur, tel que décrit précédemment.

Ces différents modules ainsi que les éléments les composant sont contrôlés de manière centralisée au moyen de la carte mère de la station de base à laquelle ils sont connectés.

En pratique, la projection de ces fluides se fait par le tuyau et la buse décrits précédemment. Le tuyau est de préférence de moyenne section.

Le nettoyeur haute pression est équipé de valve(s) à l'entrée du tuyau, permettant l'accès des produits de lavage, ainsi qu'un Y permettant de basculer sur le compresseur afin de fournir de l'air comprimé.

De manière correspondante, la buse du drone est munie d'une valve automatique permettant la sortie du fluide à haute pression, par exemple au moins 15 bars pour l'air et au moins 150 bars pour les liquides.

De préférence, le nettoyeur haute pression est réglable (par exemple manuellement via un bouton) en débit, par exemple de 0 à 500 L/h. Il est également réglable (par exemple manuellement via un bouton) en puissance. Par exemple, il fournit une pression de travail de 150 bars et une puissance maximum de 185 bars. Pour ce faire, il dispose d'un moteur électrique ayant une puissance d'entrée de par exemple 2.7 kW.

Ces valeurs ne sont données qu'à titre d'illustration et les modes de réalisation ne sont pas limités à celles-ci.

L'osmoseur a par exemple les caractéristiques suivantes :
- débit direct ;
- débit réglable (par exemple manuellement via un bouton) d'au moins 600 L/h ;
- alimentation électrique 230 V / 50 Hz.

Dans des modes de réalisation, l'osmoseur est associé à des pompes boosters pour améliorer le rendement de la membrane par une augmentation de la pression.

Le compresseur quant à lui comprend de préférence un manodétendeur avec des sorties multi profil et un compteur horaire. Il fournit par exemple un débit d'air de 30 mètres cubes par heure avec une puissance réglable (par exemple manuellement via un bouton) de 0 à 15 bars. Il comprend par exemple un réservoir de 150 L.

Selon un second mode de réalisation, le robot est un robot d'habillage. La station de base est alors conçue pour projeter de la peinture de différentes couleurs afin d'imprimer une image directement sur la façade du bâtiment.

Dans ce mode de réalisation, le compresseur de la station de base est réglable (par exemple manuellement via un bouton) en puissance. Par exemple, il fournit une pression allant jusqu'à environ 20 bars pour un débit d'environ 15 kg /min. De préférence, la station de base comprend une cuve de 60 L composée de cinq cuves, une pour chaque couleur primaire.

La **figure 2** représente, sous forme d'organigramme, des étapes générales d'un procédé conforme à un mode de réalisation de l'invention. Ce procédé est par exemple mis en oeuvre par le robot 100 représenté sur la figure 1.

Au cours de l'étape 200, le robot met en oeuvre un mappage de la surface à traiter afin d'en modéliser les contours et reliefs. Pour ce faire, le drone parcourt la surface à une distance constante (par exemple de 1 à 3 mètres) et capture des données. Il s'agit ici notamment de délimiter la surface à traiter. Un opérateur peut suivre cette étape et éventuellement intervenir lors de celle-ci sur un dispositif électronique tiers sur lequel des images filmées par le drone sont affichées.

Au cours d'une étape 205, le robot recherche dans sa mémoire si une surface précédemment mémorisée correspond à la surface mappée à l'étape 200. Si c'est tel est le cas, cela signifie qu'une opération de maintenance a déjà été effectuée précédemment pour cette surface. Dans ce cas, l'opération de maintenance peut être rejouée directement, par exemple après approbation de l'opérateur via un dispositif électronique tiers connecté à la station de base ou au drone.

Si la surface mappée à l'étape 200 ne correspond à aucune surface déjà connue du robot, le procédé se poursuit avec l'étape 210.

Au cours d'une étape 210, le drone réalise des mesures plus fines afin d'obtenir une carte plus précise du bâtiment sur laquelle sont différenciés des éléments particuliers comme les fenêtres, murs, consoles de climatisation et allèges.

Cette carte est mémorisée par le robot de sorte à pouvoir être rejouée si besoin par la suite sans nécessiter de calculer de nouveau la surface.

Au cours d'une étape 220, le drone procède à l'opération de maintenance choisie par l'opérateur. En pratique, l'opérateur place le drone à un point donné. Celui-ci, grâce à ses capteurs, reste à une distance donnée de la façade. Après le mappage, l'algorithme va ordonner le parcours à suivre par le drone pour mettre en oeuvre l'opération de maintenance. L'opérateur peut contrôler que tout se passe bien et intervenir si besoin.

Dans un premier mode de réalisation, l'opération de maintenance est une opération de lavage de la façade. Par exemple, cette opération comprend une séquence de quatre passages successifs du drone sur la façade, chaque passage se faisant selon un parcours donné :
- un premier passage consiste à pulvériser un produit nettoyant,
- un deuxième passage consiste à pulvériser un produit à haute pression,
- un troisième passage consiste à pulvériser de l'eau osmosée, puis
- un quatrième passage consiste à pulvériser de l'air à haute pression, compressé par le compresseur de la station de base.

Dans un second mode de réalisation, l'opération de maintenance est une impression de graffiti sur la surface. Le procédé lance le dessin préalablement fait sur un ordinateur ou une application pour smartphone et transmis à la carte mère du drone. Le programme s'exécute en formant par exemple des colonnes de haut en bas puis de la gauche vers la droite selon le tracé pour réaliser le graffiti.

A la fin de l'étape 220, l'opération de maintenance est de préférence mémorisée avec la carte obtenue à l'étape 210 de sorte à pouvoir être rejouée automatiquement lorsque le robot détecte ultérieurement que la surface a déjà été traitée (étape 205). Avantageusement, une économie de calcul et donc un gain de temps est réalisé puisque la cartographie fine est déjà effectuée.

Une étape optionnelle de contrôle 230 est ensuite effectuée.

Selon un mode de réalisation, au cours de cette étape, le drone filme la façade afin de détecter d'éventuelles résistances de saleté. Suite à cela il lance un programme spécifique pour nettoyer les traces à traiter en haute pression.

De manière avantageuse, la carte mère du drone ou de la station de base peut procéder au calcul des consommations des différents fluides pendant chaque séquence et les mémoriser avec la durée de la séquence. A partir des consommations pour une séquence donnée, elle peut fournir une estimation des consommations pour toute l'opération de maintenance, puis, en fin d'opération, indiquer la différence entre l'estimation et la consommation et/ou la durée effectives.

Des exemples de commandes et fonctionnalités pouvant être actionnées par un opérateur via un dispositif électronique tiers (exemple : smartphone) et mises en oeuvre par le robot ou en variante automatiquement mises en oeuvre par le robot sont maintenant décrites. Le nom des commandes et fonctionnalités n'est pas limitatif.

« Déclenchement du parachute » : cette commande déclenche les parachutes, par exemple lorsque les informations obtenues par les capteurs et caméras au niveau du drone sont anormales, par exemple à cause d'une chute du drone ou d'un choc subi par celui-ci.

« Retour à la base » : cette fonctionnalité permet un retour du drone vers la station de base, par exemple en cas de coupure de connexion ou de courant, de détection de vent violent ou d'une donnée anormale au niveau des mouvements.

« Séquence d'initialisation » : cette fonctionnalité consiste en une séquence de test du drone, de la station de base et/ou du dispositif électronique tiers afin de vérifier qu'ils sont opérationnels. Par exemple, le drone se place au niveau d'une première surface à traiter et simule une séquence entière de maintenance sans se déplacer afin de vérifier que tous les modules sont opérationnels. Par exemple, il peut essayer de projeter les différents fluides et l'air.

« Mode manuel » : cette commande active un mode dans lequel l'opérateur utilise le dispositif électronique tiers pour diriger le drone sur chacune de ces actions. Elle est utile pour cartographier manuellement la façade de sorte à lancer le mode automatique par la suite. Cette commande permet également à l'opérateur d'intervenir manuellement au cours du fonctionnement automatique du robot, par exemple pour modifier le parcours ou ajouter une séquence (exemple : nettoyage haute pression sur une partie).

« Gestion de navigation » : cette fonctionnalité permet de calculer la vitesse de rotation des moteurs du drone à partir de données mesurées par ses capteurs afin d'assurer sa stabilité. En pratique, les capteurs envoient des données mesurées en continu à la carte mère du drone. Ainsi, par exemple en cas de coup de vent violent, les gyromètres vont détecter un mouvement qui nécessite une augmentation de la vitesse de rotation des moteurs pour palier à cette perturbation. Il est précisé que la station de base est configurée pour piloter les vannes et le compresseur d'air et de fluide à travers le même tuyau. L'envoi d'un jet est compris par le drone comme la poussé d'un coup de vent. La commande de gestion de navigation permet ainsi d'assurer la stabilité du drone malgré les perturbations dues à l'envoi du jet.

« Gestion 4 en 1 » : cette fonctionnalité permet à l'opérateur de gérer le changement de module de la vanne pour l'envoi des différents fluides par le compresseur ainsi que la pression. Ainsi, par exemple, cette commande permet de retourner sur une zone précise et de laver cette zone en haute pression.

« Mode fixe par rapport à la surface » : cette commande permet de délimiter le champ d'action du drone grâce aux capteurs qui mesurent la distance par rapport à la surface. En limitant le déplacement à un plan parallèle à la surface à traiter, on s'assure que les mouvements du drone sont contraints à un espace délimité. Cela améliore la sécurité du robot.

« Mode Automatique » : cette commande utilise un enregistrement des mouvements du drone précédemment commandés par l'opérateur, dans une base de données située dans la station de base. La station de base simule une manette qui reproduit les mouvements enregistrés, aux mesures de sécurité prêt. Si la position réelle du drone ne correspond pas à celle enregistrée dans la base de données lors du déclenchement du mode automatique, le drone va se déplacer jusqu'au point enregistré pour reprendre ensuite le parcours enregistré.

« Retour sur le parcours » : cette commande est mise en oeuvre lorsqu'une différence substantielle (supérieure à un seuil prédéterminé) est observée entre des données mesurées (par exemple coordonnées GPS) par les capteurs lors du rejeu d'un programme et les données enregistrées dans la base de données pour ce programme. Elle permet au robot d'enclencher une séquence qui consiste, en fonction de cette différence, à revenir au point souhaité par l'opérateur.

A titre d'illustration, le robot enclenche une séquence donnée de la même manière que l'aurait fait l'opérateur. Après une vingtaine d'enchainements de la séquence, les conditions atmosphériques ont changé de sorte que la différence entre les données de la séquence actuelle et celles enregistrées au préalable est au-dessus du seuil. Un signal est envoyé à l'opérateur et une tentative de récupération du parcours. Par exemple, si les coordonnées GPS ne sont pas respectées, alors le robot va enclencher les séquences qui ont l'effet voulu, c'est-à-dire dont il sait que l'enchainement va modifier les coordonnées de telle manière que la différence va s'annuler.

« Pointage objectif » : cette commande permet de définir des points par lesquels le robot devra transiter ou des points définissant une zone qu'il devra au contraire éviter. Cette commande permet également de demander au robot de revenir à un emplacement précédent, par exemple pour le faire circuler sur le périmètre d'une zone.

A titre d'illustration, on peut définir 4 points délimitant la bordure extérieure d'une fenêtre. Le robot peut alors se déplacer de sorte à ne traiter que cette zone (cas du lavage de fenêtre par exemple) ou au contraire à éviter cette zone (cas de la projection de peinture par exemple).

En pratique, il est possible de prévoir une intelligence artificielle dans le robot capable de reconnaitre des éléments de la surface, sur lequel un pointage peut être effectué manuellement par l'opérateur. A titre d'illustration, l'image d'une surface filmée par une caméra du drone peut être affichée sur la tablette (dispositif électronique tiers) de l'opérateur afin que celui-ci définisse manuellement les points à considérer. Le robot peut ensuite enrichir sa base de données et reconnaitre de lui-même les éléments remarquables par la suite. De préférence, l'opérateur peut toujours agir sur les éléments reconnus automatiquement par le robot, par l'intermédiaire de sa tablette.

« Superficie objectif » : cette commande permet de définir la surface totale à traiter. A titre d'illustration, l'opérateur va par exemple encadrer l'immeuble entier pour délimiter la zone dans laquelle le robot va pouvoir se déplacer.

« Film complet de la surface » : cette commande permet d'obtenir un film de la surface à traiter afin de mesurer des données sur la surface. Cette commande permet à l'opérateur de se balader ultérieurement visuellement sur la façade, par exemple pour y reconnaitre des zones à traiter de nouveau.

« Suivi de la surface de nettoyage » (Produit/Rince/Haute-Pression/Sèche) : cette commande permet d'activer les séquences d'un programme de nettoyage en fonction de la superficie de la surface à traiter et d'optimiser en amont le parcours, c'est-à-dire les mouvements du drone, en fonction de quadrillages prédéfinis pour effectuer le nettoyage. A titre d'illustration, le robot peut déterminer que le produit doit agir pendant une durée donnée pour ensuite être rincé puis séché et commander les mouvements du drone en fonction.

« Reproduction de la surface » : cette commande permet d'exploiter les symétries de certaines surfaces en rejouant une même séquence sur différentes zones de la surface. A titre l'illustration, cette commande peut être avantageusement utilisée sur une fenêtre d'un gratte-ciel ou bien un étage entier. En effet, en ayant cartographié le premier étage, il est possible d'exploiter les données obtenues pour cartographier les étages supérieurs, permettant ainsi un gain de temps au niveau de la cartographie.

« Optimisation des parcours globaux » : cette commande permet de supprimer ou modifier automatiquement des étapes du parcours prédéfini. Par exemple, cela consiste à redéfinir un arc de cercle en une ligne droite.

« Prévision mission » : cette commande permet de générer automatiquement un parcours/programme à partir de parcours précédents et de la durée des séquences effectuées.

« Gestion des ressources » : cette commande permet de connaitre la durée et la quantité de fluide à prévoir pour un programme prédéfini.

« Analyse de l'image d'une vitre » : cette commande repose sur l'apprentissage, par une intelligence artificielle, des motifs des images capturées par la caméra du drone. Par un apprentissage par renforcement, c'est-à-dire par exemple en encadrant graphiquement le champ de pixels qui entoure la vitre, l'intelligence améliore sa capacité à reconnaitre une vitre dans une image. Un but de cette commande est de faire comprendre au drone qu'il doit aller à un point de l'image qu'il reconnait.

A titre d'illustration, un scénario d'utilisation des différentes fonctionnalités du robot selon des modes de réalisation de l'invention est maintenant décrit.

Une commande « Séquence d'initialisation » est mise en oeuvre. Puis, l'opérateur pilote le drone manuellement avec le « Mode manuel » et à l'aide de la fonction « Gestion de navigation » afin de placer le drone face à l'immeuble à traiter. Une fois proche de la surface, le drone va se positionner à une distance prédéterminée de la surface (« Mode fixe par rapport à la surface ») sous l'action d'un bouton spécifique prévu à cet effet. L'opérateur délimite ensuite la surface avec la fonction « Superficie objectif » et place manuellement le drone au niveau des extrémités. Ceci lui permet de réaliser un mappage de la surface à traiter. Le drone filme ensuite l'ensemble de la surface avec la fonction « Film complet de la surface ». L'opérateur le place par rapport à la première vitre, puis déclare une nouvelle surface de nettoyage, puis place les points définissant la vitre avec la fonction «Pointage objectif ». Pour la deuxième vitre, l'opérateur sélectionne les commandes « Reproduction de la surface » et « Analyse de l'image d'une vitre » permettant ainsi une assistance du pointage lors de la cartographie. Une carte fine des reliefs est ainsi obtenue. Le « Mode automatique » est ensuite lancé, éventuellement avec « Possibilité de retour ». Le « Suivi de la surface de nettoyage » et la « Gestion 4 en 1 » sont ensuite mis en oeuvre. En même temps, la carte mère du robot met en oeuvre les commandes « Optimisation des parcours globaux », « Prévision mission » et la « Gestion des ressources ».

Les exemples qui précèdent ne sont que des modes de réalisation de l'invention qui ne s'y limite pas. Notamment, le robot peut comprendre une pluralité de drones tels que décrits précédemment, communiquant entre eux.

## Revendications

1. Robot (100) de maintenance d'une surface comprenant :
- un aéronef (110) conçu pour se déplacer à proximité de la surface ;
- une station de base (120) conçue pour rester au sol ;
- une gaine étanche (140) reliant l'aéronef à la station de base, la gaine étanche comprenant :
- un tuyau pour alimenter l'aéronef en fluide à partir de la station de base pendant une opération de maintenance de la surface, et
- un câble pour alimenter l'aéronef en énergie ;
le robot (100) étant **caractérisé en ce que** :
l'aéronef (110) embarque au moins un capteur configuré pour obtenir des informations sur la surface, ces informations étant analysées et mémorisées afin de définir un programme de maintenance de la surface ; et
la station de base (120) est configurée pour orchestrer l'exécution du programme de maintenance de la surface.

2. Robot (100) selon la revendication 1, dans lequel l'aéronef (110) est un drone télépiloté.

3. Robot (100) selon l'une quelconque des revendications précédentes, dans lequel la gaine étanche comprend en outre un câble permettant l'échange de données entre l'aéronef et la station au sol.

4. Robot (100) selon l'une quelconque des revendications précédentes, dans lequel la station de base (120) comprend des moyens de communication sans contact avec un dispositif électronique externe contrôlé par un opérateur (150).

5. Robot (100) selon l'une quelconque des revendications précédentes, dans lequel ledit câble est configuré pour permettre le transit d'informations entre l'aéronef (110) et la station de base (120) transitent par le câble au moyen d'un courant porteur circulant dans ledit câble.

6. Robot (100) selon l'une quelconque des revendications précédentes, dans lequel la gaine étanche (140) est fixée à un roulement à bille au niveau de la station de base (120).

7. Robot (100) selon l'une quelconque des revendications précédentes, **caractérisé en ce qu'**il est configuré pour mettre en oeuvre une opération de nettoyage ou d'habillage.

8. Robot (100) selon l'une quelconque des revendications précédentes, **caractérisé en ce qu'**il est configuré pour mettre en oeuvre les étapes suivantes :
- cartographie (200) de la surface ;
- test (205) pour déterminer si la surface cartographiée est déjà connue du robot ;
- si la surface est inconnue du robot :
- réalisation (210) d'une carte fine des reliefs de la surface, puis
- lancement (220) d'une opération de maintenance à partir de la carte réalisée, et
- enregistrement de l'opération de maintenance comme programme associé à la surface ;
- si la surface est déjà connue, lancement (220) d'une opération de maintenance selon un programme précédemment enregistré pour cette surface.

9. Robot (100) selon la revendication 8, également configuré pour mettre en oeuvre une étape de contrôle (230) durant laquelle au moins une zone de la surface à traiter de nouveau est identifiée.
